# FASCICULE DE BREVET EUROPEEN

(11) **EP 1 593 008 B1**
(45) Date de publication et mention de la délivrance du brevet: **30.01.2008**
(21) Numéro de dépôt: 03709922.3
(22) Date de dépôt: 06.02.2003
(51) Int. Cl.: G05B 19/409

(54) **PROCEDE POUR L'OPITIMISATION DES JOINTS DE STRATES DANS UNE MODELISATION OU PROTOTYPAGE PAR DECOMPOSITION EN STRATES ET PIECES AINSI OBTENUES**
VERFAHREN ZUR OPTIMIERUNG DER SCHICHTÜBERGÄNGE IN EINER MODELLIERUNG ODER PROTOTYPENFERTIGUNG DURCH EINE SCHICHTZERGLIEDERUNG UND NACH DIESEM VERFAHREN HERGESTELLTE WERKSTÜCKE
METHOD OF OPTIMISING THE JOINTS BETWEEN LAYERS IN MODELLING OR PROTOTYPING INVOLVING LAYER DECOMPOSITION, AND PARTS THUS OBTAINED

(43) Date de publication de la demande: 09.11.2005
(73) Titulaire: Cirtes Src SA Cooperative d'Ues, 88100 Saint-Die-des-Vosges (FR)
(72) Inventeur: BARLIER, Claude, F-88100 Coinches (FR); CUNIN, Denis, F-88600 Les Poulières (FR); DELEBECQUE, Benoît, F-88100 Saint Die des Vosges (FR)
(74) Mandataire: Poupon, Michel
(86) Numéro de dépôt international: PCT/FR2003/000367
(87) Numéro de publication internationale: WO 2004/079463

(56) Documents cités:
- EP-A- 0 585 502
- EP-A- 0 763 417
- US-A- 5 776 409

## Description

La présente invention a _pour objet un procédé pour l'optimisation des joints dé strates dans leur partie affleurant en surface d'une pièce obtenue par modélisation ou prototypage du type décomposition en strates assistée par ordinateur.

L'invention a également pour objet les strates élémentaires ainsi obtenues, ainsi que les pièces résultant de leur assemblage.

Dans un procédé de type connu de prototypage rapide, objet par exemple du brevet européen EP 0 585 502 -B1, on réalise une pièce prototype en mettant en oeuvre un logiciel de décomposition de la pièce à réaliser en strates élémentaires, lesdites strates étant assemblées entre elles puis l'assemblage final pouvant être repris extérieurement en particulier pour enlever les éventuelles aspérités ou imperfections d'assemblage.

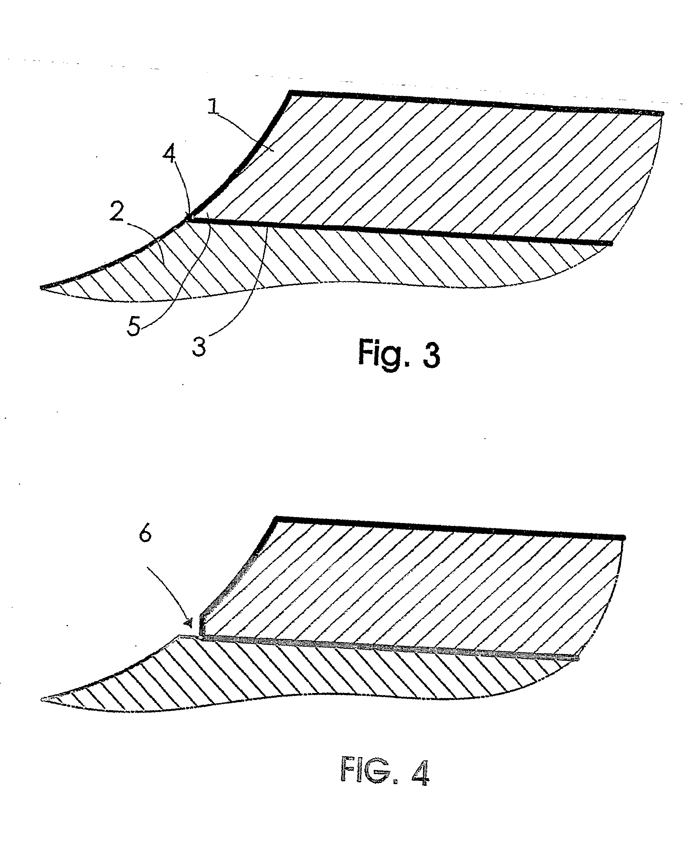

On a représenté aux figures 3 et 4 schématiquement un détail d'assemblage de strates avec illustration du problème rencontré.

Dans un assemblage de deux strates (1,2) une partie du joint (3) vient affleurer en extérieur selon (4). On comprend que la zone (5) de la strate (1) comporte à cet endroit peu de matière, ce qui par usinage, polissage, peut entraîner un enlèvement de matière au niveau précisément de ce joint comme représenté schématiquement à la figure 4 en (6).

Il en découle une pièce imparfaite, à surface non régulière et donc non satisfaisante pour certaines applications.

Cette conception de joint classique présente en outre d'autres inconvénients :
- faible résistance;
- mauvaise tenue à l'usinage ;
- mauvaise tenue aux sollicitations mécaniques lors de l'utilisation (en particulier sollicitations à la pression, qu'elle soit d'origine mécanique ou fluidique) ;
- mauvaise tenue à toutes les opérations d'assemblage : collage, soudure, masticage ;
- déformations possibles lors de l'usinage, des manipulations et lors de l'assemblage.

L'invention a pour objet de remédier à ces inconvénients.

L'invention a pour objet de remédier à ces inconvénients.

L'art antérieur connaît le document D₁ US-A-5776 409 qui concerne une amélioration d'un procédé de stéréolythographie, non pertinent vis à vis du procédé selon l'invention et qui ne résout pas les inconvénients cités ci-dessus.

Conformément à l'invention on propose en effet un procédé pour l'optimisation des joints de strates dans leur partie affleurant en surface d'une pièce obtenue par modélisation ou prototypage du type décomposition en strates assistée par ordinateur, caractérisé en ce que le profil de liaison de deux strates successives est mathématiquement et numériquement défini en mettant en oeuvre un algorithme dans lequel la surface du joint au niveau de la zone d'extrémité à proximité de la partie venant en affleurement est toujours sensiblement normale au plan tangent à la surface au point d'affleurement, quelque soit le décalage entre le plan de strate et le point d'affleurement.

On comprendra mieux l'invention à l'aide de la description faite ci-après d'un certain nombre de variantes de mise en oeuvre, en référence aux dessins annexés dans lesquels :
- la figure 1A et une représentation en CAO d'une pièce complexe à réaliser, avec quelques variantes de situation possibles,
- la figure 1B illustre en CAO une strate obtenue avec le procédé de l'invention, illustrant celle-ci en trois dimensions,
- les figures 2A et 2B représentant une strate obtenue conformément à l'invention, vue de dessus (fig. 2A), et coupe (fig. 2B),
- les figures 3,4 illustrent des problèmes rencontrés potentiellement avec les strates de l'art antérieur,
- les figures 5 et 6 illustrent schématiquement le principe de base du procédé selon l'invention,
- les figures 7, 8A, 8B, 8C illustrent des variantes simples de mise en oeuvre,
- la figure 9 illustre une application à des profils en dépouille et/ou contre-dépouille,
- la figure 10 illustre un détail sur strate d'un assemblage selon la figure 9,
- la figure 11 illustre un détail sur strate d'un assemblage en contre-dépouille selon la figure 9, avec deux variantes,
- les figures 12A à F illustrent l'application à une paroi.

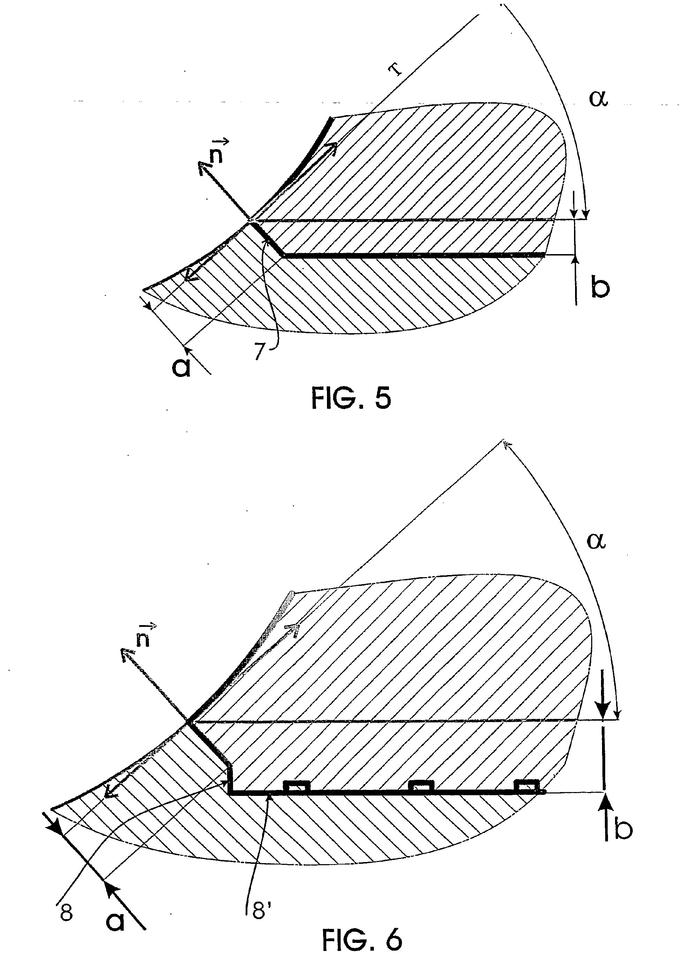

On se réfère tout d'abord à la figure 5.

On a indiqué sur la figure les paramètres essentiels d'un joint obtenu conformément au procédé de l'invention :
- angle α entre la tangente et le plan de strate,
- a : longueur du joint
- b : décalage du plan de strate,
- n̅ : normale au point de jonction.

Selon l'invention, le joint (7) est normal au plan tangent (T) sur une longueur a.

On notera que :
- si a est constant, b est f (α) ;
- si α = π/2, b=0.

On résout ainsi le problème du joint, tel qu'exposé ci-dessus, mais les strates ainsi obtenues nécessitant ce type de calcul, seront d'épaisseur variable.

En outre, le profil de la strate est variable tout au long de la périphérie. De plus, la ligne de joint n'est pas nécessairement dans un même plan.

Pour des angles α proches de π/2, il faudra en outre prévoir des moyens de positionnement relatif des strates entre elles, comme explicité ci-après.

On se référera à la figure 6.

Toutes choses égales par ailleurs par rapport à la réalisation de la figure 5, on réalise :
- une maîtrise de la matière au niveau du joint (but recherché),
- une maîtrise du positionnement en (X,Y) par un insert de centrage (8),
- une maîtrise de la précision en (Z) par le profil de positionnement (8'),
- maîtrise et renforcement de l'assemblage et de sa tenue mécanique.

Différentes remarques peuvent être apportées à cet égard :
- le profil de positionnement est calculé par rapport au contour extérieur de la strate, l'angle α étant variable le long de ce contour ;
- le profil peut être obtenu en microfraisage, en fraisage du profil ou à l'aide d'une fraise de forme. Dans ce dernier cas, il est bien entendu constant sur la périphérie ;
- l'emboîture est hyperstatique ; il est possible d'y prévoir des jeux pour privilégier certains contacts.

Différentes variantes seront décrites brièvement ci-après :

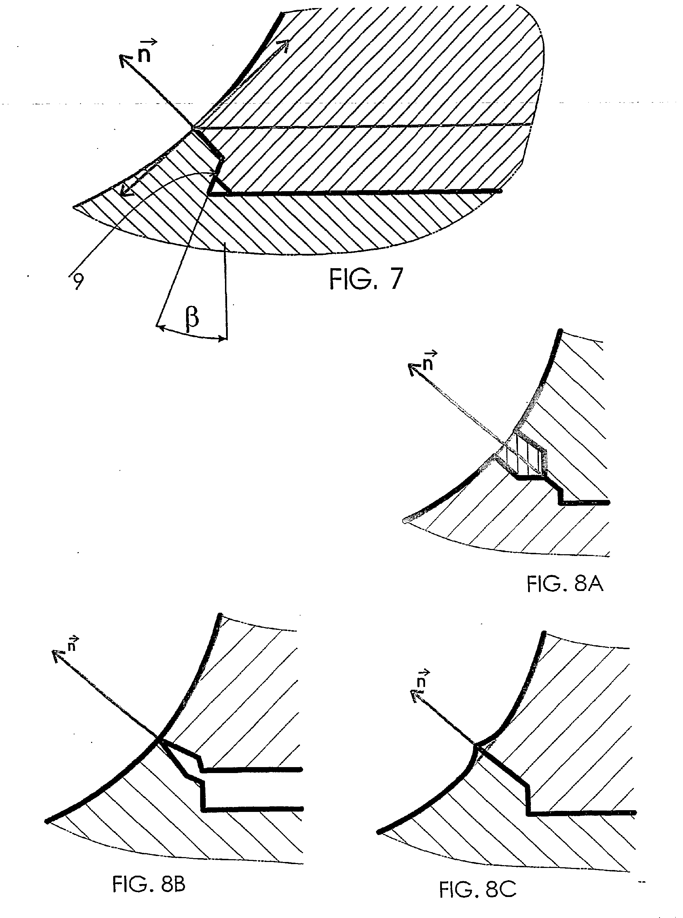

- à la figure 7, l'emboîture est rendue indémontable par la présence d'une contre-dépouille (β) sur le profil de positionnement (9), le montage étant possible du fait de l'élasticité des matériaux ;
- comme visible sur les figures 8A, 8B et 8C, il est également possible d'aménager le joint à l'extérieur en fonction du degré d'étanchéité recherché, à savoir :
   o pour amener de la matière en supplément ce qui entraîne un bourrelet extérieur par déformation : 8B puis 8C,
   o pour ménager une réserve de joint, figure 8A.

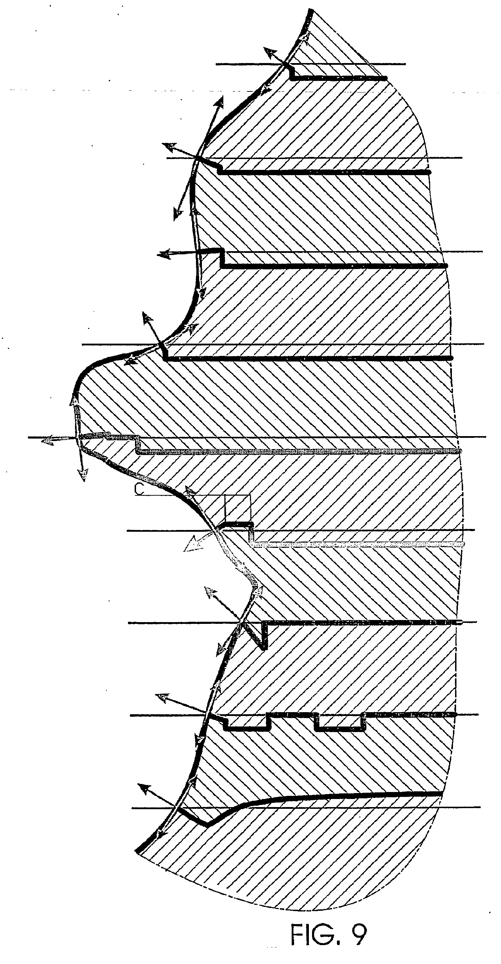

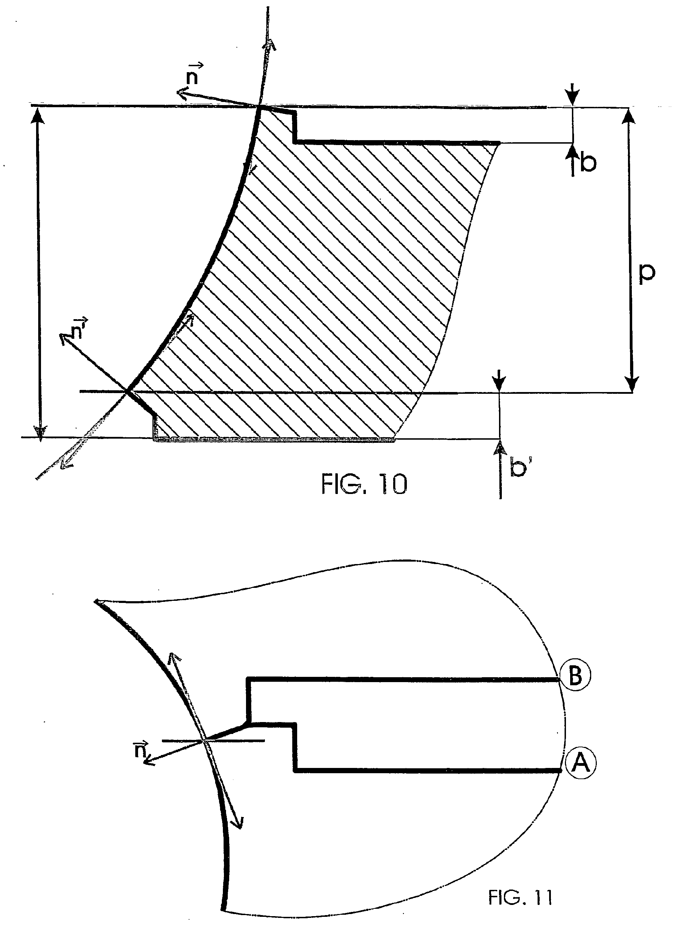

On a représenté aux figures 9, 10 et 11 des exemples d'application à des dépouilles et contre-dépouilles.

Les détails sur strates aux figures 8 et 9 montrent que les décompositions sont possibles en dépouille et contre-dépouille, toujours avec le même principe de joint, le choix étant en outre possible concernant le côté de l'emboîture (strate supérieure ou inférieure), voire leur combinaison dans l'espace.

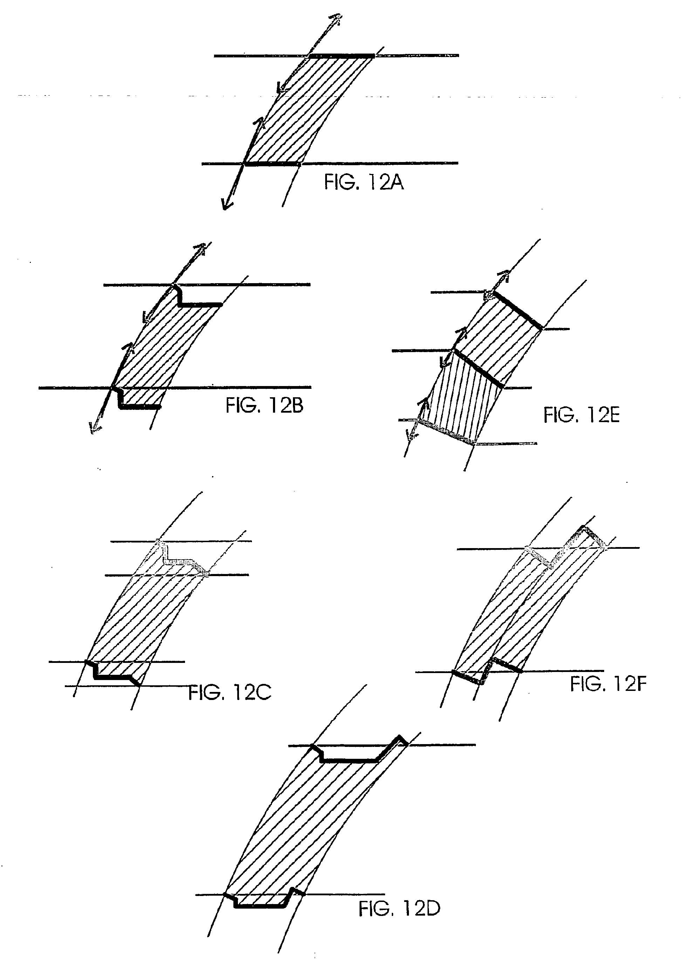

Enfin, on a représenté aux figures 12A à 12F des variantes d'application aux parois :
- sans emboîture : figure 12A;
- avec emboîture extérieure seulement et plan : figure 12B;
- avec emboîture extérieure et intérieure et plan : figure 12C;
- avec emboîture extérieure et intérieure dans le même plan : figure 12D;
- avec décomposition normale simple : figure 12 E;
- avec emboîture double à décrochement : figure 12 F.

On constatera de ce qui précède que c'est la numérisation du profil qui permet d'obtenir un profil de liaison et d'imbrication mathématiquement défini, paramètré fonctionnellement.

Il n'y a aucune limite, le profil pouvant être gauche, les surfaces de joint pouvant être complexes et calculées.

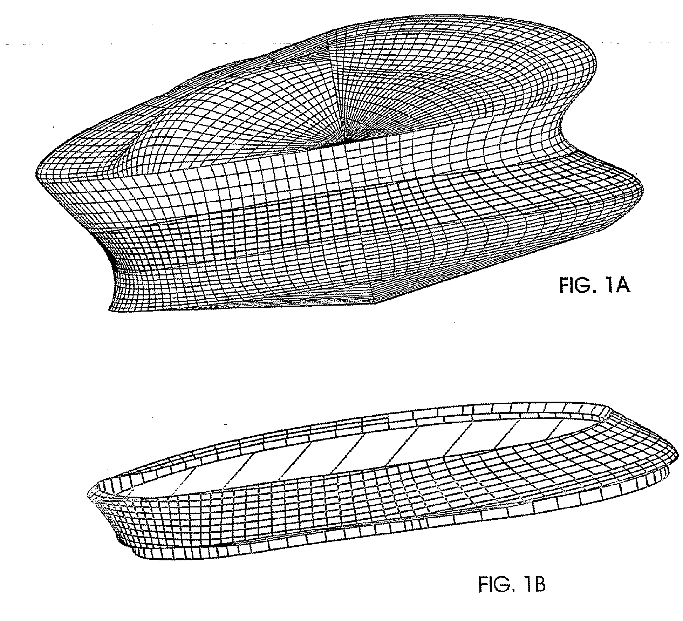

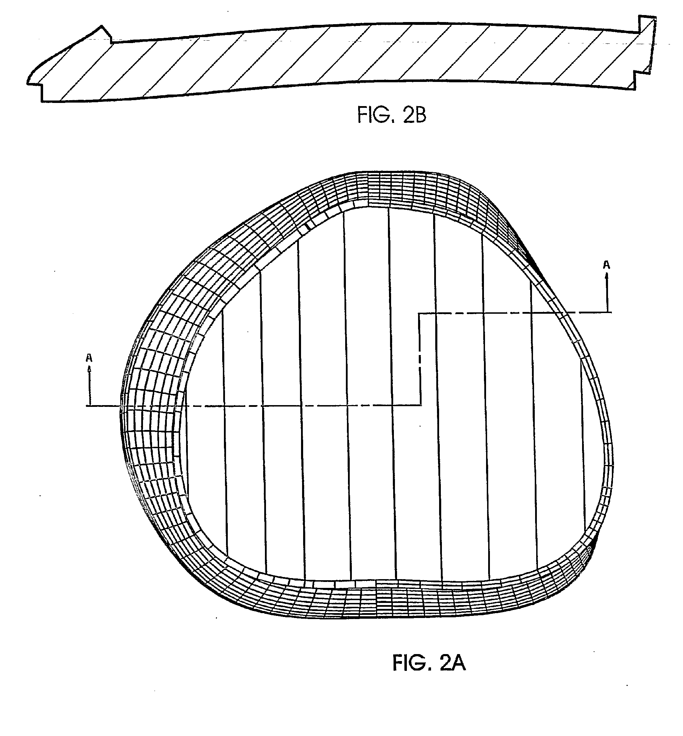

On comprendra que l'innovation majeure réside dans le principe d'emboîtement, les formes étant complètement paramétrées et dépendant de la surface de section dans laquelle s'effectue l'imbrication ; il peut s'agir d'une surface plane mais aussi d'une surface gauche, comme illustrée aux figures 1B ; 2A et 2B.

Par la mise en oeuvre d'un algorithme géométrique, la forme des joints d'imbrication est obtenue par calcul informatique systématique.

En conséquence, la forme du joint dépend du plan de stratification, et elle ne peut donc être connue à l'avance.

On pourra, au niveau des emboîtures, prévoir les parties fonctionnelles des fonctions induites dans la pièce finale, par exemple non limitatif, des canaux de régulation (refroidissement, chauffage, etc...) et/ou d'amenée de produits d'assemblage et/ou de circulation de fluides.

Ce procédé trouve son application dans tous les domaines de la conception de pièces par strates par prototypage et outillage rapide déjà évoqués, avec toutes les extensions possibles imaginables par l'homme de l'art pour la décomposition de pièce existante ou pour la conception de nouvelles pièces.

## Revendications

1. Procédé pour l'optimisation des joints de strates dans leur partie affleurant en surface d'une pièce obtenue par modélisation ou prototypage du type décomposition en strates assistée par ordinateur, **caractérisé en ce que** le profil de liaison de deux strates successives est mathématiquement et numériquement défini en mettant en oeuvre un algorithme dans lequel la surface du joint (7) au niveau de la zone d'extrémité à proximité de la partie venant en affleurement est toujours sensiblement normale (n̅) au plan tangent à la surface au point d'affleurement, quelque soit le décalage (b) d'un plan de strate et du point d'affleurement.

2. Procédé selon la revendication 1, **caractérisé en ce que** le profil de chaque strate est variable tout au long de la périphérie.

3. Procédé selon l'une quelconque des revendications 1 et 2, **caractérisé en ce que** l'emboîture de deux strates superposées est rendue indémontable par la présente d'une contre dépouille (β) sur un profil de positionnement (9).

4. Procédé selon l'une quelconque des revendications 1 à 3, **caractérisé en ce que** le joint est réalisé avec apport de matière en supplément ou réserve de joint.

5. Procédé selon l'une quelconque des revendications 1 à 4, **caractérisé en ce que** les profils sont adaptés à la dépouille et contre dépouille.

6. Procédé selon l'une quelconque des revendications 1 à 5, **caractérisé en ce que** l'on réalise une maîtrise du positionnement en (X,Y) par un insert de centrage (8) et en (Z) par un profil de positionnement (8').

7. Procédé selon l'une quelconque des revendications 1 à 6, **caractérisé en ce que** l'emboîture est hyperstatique.

8. Procédé selon l'une quelconque des revendications 1 à 7, **caractérisé en ce que** l'angle α entre la tangente T et le plan de strate n'est pas constant tout au long d'un même profil de joint.

9. Strate élémentaire, **caractérisée en ce qu'**elle est obtenue par la mise en oeuvre du procédé selon l'une quelconque des revendications 1 à 8, et dont le plan de strate et le point d'affleurement présentent un décalage (b).

10. Pièce de modélisation, de prototypage ou d'outillage, **caractérisée en ce qu'**elle est obtenue par l'assemblage des strates selon la revendication 9.

## Claims

1. Process for optimizing joints of strata in their portion meeting the surface of a part obtained by modelling or prototyping of the type with computer aided breakdown into strata, **characterized in that** the profile connecting two successive strata is mathematically and numerically defined by using an algorithm in which the surface of the joint (7) at the end area close to the portion meeting the surface is always substantially perpendicular (n) to the tangent plane on the surface at the point of meeting the surface, irrespective of the offset (b) of a stratum plane relative to the point of meeting the surface.

2. Process according to claim 1, **characterized in that** the profile of each stratum can vary along the entire periphery.

3. Process according to either of claims 1 and 2, **characterized in that** the interlock of two superimposed strata is made non-demountable by the presence of an undercut (β) on a positioning profile (9).

4. Process according to any one of claims 1 to 3, **characterized in that** the joint is made with the supply of material in addition or a seal space.

5. Process according to any one of claims 1 to 4, **characterized in that** the profiles are adapted to the draught and undercut.

6. Process according to any one of claims 1 to 5, **characterized in that** control of positioning is achieved along (X, Y) with a centring insert (8) and along (Z) with a positioning profile (8').

7. Process according to any one of claims 1 to 6, **characterized in that** the interlock is statically over-determined.

8. Process according to any one of claims 1 to 7, **characterized in that** the angle α between the tangent T and the stratum plane is not constant throughout one single joint profile.

9. Elementary stratum, **characterized in that** it is obtained by using the process according to any one of claims 1 to 8 and of which the stratum plane and point of meeting the surface have an offset (b).

10. Modelling, prototyping or tooling part, **characterized in that** it is obtained by assembling strata according to claim 9.

## Patentansprüche

1. Verfahren zur Optimierung der Verbindungen von Schichten in einem Bereich einer Schicht, der bündig in der Oberfläche eines Werkstückes liegt, das durch computergestützte Modellierung oder Prototypenfertigung von der Art hergestellt wird, bei der eine Zergliederung in Schichten erfolgt, **dadurch gekennzeichnet, dass** das Verbindungsprofil von zwei aufeinanderfolgenden Schichten mathematisch und numerisch definiert wird, indem ein Algorithmus benutzt wird, bei dem die Fläche der Verbindung (7) in der Endzone nahe dem bündig verlaufenden Bereich stets im Wesentlichen senkrecht (n̅) zu der Ebene ist, die im bündig liegenden Punkt tangential zu der Oberfläche verläuft, unabhängig von dem Versatz (b) zwischen einer Schichtenebene und des bündig liegenden Punkts.

2. Verfahren nach Anspruch 1, **dadurch gekennzeichnet, dass** sich das Profil einer jeden Schicht entlang des gesamten Umfangs ändert.

3. Verfahren nach irgendeinem der Ansprüche 1 und 2, **dadurch gekennzeichnet, dass** der Zusammenhalt von zwei übereinander liegenden Schichten durch das Vorhandensein einer Hinterschneidung (β) an einem Positionierungsprofil (9) untrennbar gemacht wird.

4. Verfahren nach irgendeinem der Ansprüche 1 bis 3, **dadurch gekennzeichnet, dass** die Verbindung mittels Hinzufügen von zusätzlichem Material oder einer Abdeckung an der Verbindung hergestellt wird.

5. Verfahren nach irgendeinem der Ansprüche 1 bis 4, **dadurch gekennzeichnet, dass** die Profile an die Unterschneidung und Hinterschneidung angepasst sind.

6. Verfahren nach irgendeinem der Ansprüche 1 bis 5, **dadurch gekennzeichnet, dass** die Positionierung in (X, Y) durch einen Zentriereinsatz (8) und in (Z) durch ein Positionierungsprofil (8') kontrolliert wird.

7. Verfahren nach irgendeinem der Ansprüche 1 bis 6, **dadurch gekennzeichnet, dass** der Zusammenhalt überbestimmt ist.

8. Verfahren nach irgendeinem der Ansprüche 1 bis 7, **dadurch gekennzeichnet, dass** der Winkel α zwischen der Tangente T und der Schichtenebene entlang von ein- und demselben Verbindungsprofil nicht konstant ist.

9. Einzelschicht, **dadurch gekennzeichnet, dass** sie durch den Einsatz des Verfahrens nach irgendeinem der Ansprüche 1 bis 8 erhalten wird und dass deren Schichtenebene und der bündig liegende Punkt einen Versatz (b) aufweisen.

10. Werkstück aus der Modellierung, der Prototypenfertigung oder der Werkzeugfertigung, **dadurch gekennzeichnet, dass** es durch Zusammenfügen der Schichten nach Anspruch 9 erhalten wird.
